# EUROPÄISCHE PATENTSCHRIFT

(11) **EP 1 710 034 B1**
(45) Veröffentlichungstag und Bekanntmachung des Hinweises auf die Patenterteilung: **14.03.2012**
(21) Anmeldenummer: 06101033.6
(22) Anmeldetag: 30.01.2006
(51) Int. Cl.: B23B 37/00

(54) **Spannvorrichtung für axial harmonisch schwingende Bauteile**
Clamping device for harmonically vibrating components
Dispositif de serrage pour outils soumis aux vibrations harmoniques

(30) Priorität: 06.04.2005 DE 102005000027
(43) Veröffentlichungstag der Anmeldung: 11.10.2006
(73) Patentinhaber: HILTI Aktiengesellschaft, 9494 Schaan (LI)
(72) Erfinder: Sander, Bernhard, 81379 München (DE); John, Alexander, 6830 Rankweil (AT)
(74) Vertreter: Wildi, Roland

(56) Entgegenhaltungen:
- EP-A- 0 277 823
- EP-A- 0 646 435
- DE-A1- 10 114 672
- SU-A1- 986 752

## Beschreibung

Die Erfindung bezeichnet eine Spannvorrichtung für axial harmonisch schwingende Bauteile, insbesondere eine Werkzeugaufnahme für Ultraschall-Kernbohrkronen.

Die bekannten Lösungen zur Verbindung zweier Bauteile unterteilen sich grob in Gewindeverbindungen, Konusverbindungen und Klemmverbindungen.

Nach der GB2016350 sind bei Werkzeugaufnahmen für axial harmonisch schwingende Ultraschall-Werkzeuge sowohl Gewindeverbindungen als auch Konusverbindungen bekannt, wobei diese, bezüglich einer sich längs erstreckenden stehenden Welle, jeweils an einem Schwingungsbauch angeordnet sind, da an diesen Stellen ein Spannungsknoten ausgebildet wird und somit nur minimale axiale Zug- bzw. Druckspannungen auftreten. Bei im Ultraschall axial harmonisch schwingenden Bauteilen kann es jedoch zu Kaltverschweissungen im Gewinde bzw. in den Konusflächen kommen, wodurch diese sich wenn überhaupt nur mit dem Einsatz von Hilfsmitteln wie Spezialwerkzeugen lösen lassen.

Nach der DE4239373 wird zur Verbindung zweier Werkzeugteile eine Planflächenverspannung benutzt, wobei im radial inneren Kernbereich des ersten Werkzeugsteils ein stirnseitig offener Hohlraum mit bajonettartigem, innenkegelförmigen Hinterschnitt ausgebildet ist, in den ein Spannzapfen des zweiten Werkzeugsteils mit einem Spannkonus eingreift, der beim axialen Verspannen die radial äusseren Planflächen beider Werkzeugsteile miteinander reibkraftschlüssig verbindet. Bei Ultraschall-Beaufschlagung würde sich ein derartiger Spannzapfen von selbst lösen.

Nach der SU986752 ist bei einer Ultraschall-Spannvorrichtung das Werkzeug im longitudinalen Schwingungsbauch mittels einer federnd vorgespannten Spannhülse verspannt, welche einseitig in einem longitudinalen Schwingungsknoten gelagert ist.

Die Aufgabe der Erfindung besteht in der Realisierung einer weiteren Spannvorrichtung für axial harmonisch schwingende Bauteile. Ein weiterer Aspekt besteht in derer hilfsmittelfreien Lösbarkeit.

Die Aufgabe wird im Wesentlichen durch die Merkmale des Anspruchs 1 gelöst. Vorteilhafte Weiterbildungen ergeben sich aus den Unteransprüchen.

So weist eine Spannvorrichtung zur Verbindung zweier axial mit einer Frequenz harmonisch schwingender Bauteile mittels ihre aneinanderstossenden Planflächen eine sich axial erstreckende Federspannbrücke auf, die an einem Ende zumindest ein Spannmittel aufweist und über ein Federmittel mit zumindest einem weiteren Spannmittel am anderen Ende axial elastisch verbunden ist, wobei die Spannmittel zum jeweils gegenüberliegenden Ende hin orientierte, axial druckverspannbare Kontaktflächen ausbilden, denen an beiden Bauteilen passend ausgebildete Kontaktgegenflächen zugeordnet sind, welche an einem Schwingungsknoten einer bei dieser Frequenz ausgebildeten stehenden Longitudinalwelle positioniert sind.

Durch das Ansetzen der Spannmittel der Federspannbrücke an den Schwingungsknoten der auf den Bauteilen stehenden Longitudinalwelle ist die Federspannbrücke selbst schwingungsfrei befestigt, obwohl die zwischen den Schwingungsknoten aneinanderstossenden Planflächen der Bauteile selbst starke axiale Schwingungsamplituden aufweisen, bei üblicher Positionierung der Planflächen am Schwingungsbauch die maximalen, wodurch dort keine Axialspannungsschwingungen auftreten, deren Zugspannungskomponente die schwingungsenergieübertragende Verbindung der Bauteile lösen würden. Die praktisch dennoch an den Planflächen auftretenden, minimalen Axialspannungsschwingungen werden durch die über das Federmittel aufgebrachte Druckvorspannung vollständig in den Druckbereich verschoben, wodurch Zugspannungskomponenten gänzlich vermieden werden.

Vorteilhaft ist die Federspannbrücke eine Spannhülse, welche die Bauteile radial aussen umgibt, wodurch die Spannkräfte umfänglich gleich verteilt werden.

Vorteilhaft ist das Federmittel ein durch übliche konstruktive Massnahmen wie Dehnfalten, Dehnbeulen, Querschnittsverringerungen, Schlitzungen etc. nachgiebiger ausgebildeter, integraler Teil der Federspannbrücke, wodurch die Federspannbrücke konstruktiv und technologisch einfach einteilig ausbildbar ist. Ebenso stellt eine aus nachgiebigem Material bestehende Federspannbrücke geringen Querschnitts ein integral beinhaltetes Federmittel dar.

Alternativ vorteilhaft ist das Federmittel eine magnetische Kopplung, weiter vorteilhaft eine elektromagnetische, wodurch im Federmittel keine mechanische Ermüdung durch Axialspannungsschwingungen auftritt. Zudem ist insbesondere eine elektromagnetische Kopplung durch Unterbrechung des Stromflusses einfach lösbar.

Alternativ vorteilhaft ist das Federmittel eine mechanische Feder, die weiter vorteilhaft entweder als Zugfeder ausgebildet ist, die in direkter Anordnung zwischen den Spannmittel technologisch einfach eine Druckvorspannung einprägt, oder zwischen axial überlappenden Teilen als Druckfeder in invertierter Anordnung ausgebildet ist, wodurch die Federbaulänge selbst nicht additiv zur Spannmittellänge beiträgt.

Vorteilhaft ist die Feder eine Spiralfeder, wodurch ein relativ zu anderen Federmitteln weiterer linear-elastischer Dehnbereich realisiert wird, wodurch die Spannvorrichtung gegen Toleranzen im Axialabstand der Kontaktgegenflächen unempfindlich wird.

Alternativ vorteilhaft ist die Feder eine Tellerfeder, wodurch ein weiter Dehnbereich bei relativ zu anderen Federn kürzerer axialen Federbaulänge realisiert ist, wodurch die Baulänge der Spannvorrichtung verkürzbar ist.

Vorteilhaft ist ein Spannmittel als ringförmig geschlossener Spannring mit sich zumindest stückweise umfänglich ersteckenden Kontaktflächen ausgebildet, wodurch die Kontaktkräfte über den Umfang gegeneinander ausgeglichen und somit verteilt werden. Ebenso stellt eine entsprechende Ausbildung des Federmittels mit sich zumindest stückweise umfänglich ersteckenden Kontaktflächen ein integral beinhaltetes Spannmittel dar.

Vorteilhaft ist zumindest ein Spannring mit einer bajonettartigen Öffnung ausgebildet, an deren radial nach Innen einkragenden Bereichen Kontaktflächen ausgebildet sind, wodurch ein Bauteil mit passend zugeordneten, bajonettartigen Gegenkontaktflächen axial durch den Spannring hindurch in die Spannvorrichtung eingeführt und durch Verdrehung zur Verspannung positioniert werden kann.

Vorteilhaft ist die Federspannbrücke mit einem zur axialen Versetzung der Spannmittel ausgebildeten Öffnungsmittel verbunden, über welches gegen die Vorspannung des Federmittels die Spannmittel zueinander axial weiter beabstandbar sind, wodurch die Spannvorrichtung geöffnet werden kann.

Vorteilhaft ist das Öffnungsmittel von aussen handhabbar ausgebildet, wodurch sich durch dessen manuelle Betätigung die Spannvorrichtung hilfsmittelfrei öffnen lässt.

Vorteilhaft bildet das Spannmittel integral ein Öffnungsmittel aus, weiter vorteilhaft in Form eines drehschwenkbar festlegbaren Excenterhebels, dessen umlaufende Exzenterfläche die Kontaktfläche ausbildet, wodurch die Anzahl der Bauteile reduzierbar ist.

Vorteilhaft ist die Spannvorrichtung an genau einem Ende der Federspannbrücke über ein Spannmittel fest mit einem Antriebsmittel einer Maschine verbunden sowie als Werkzeugaufnahme für zumindest teilweise harmonisch schwingend angetriebene Werkzeuge ausgebildet, wodurch derartige Werkzeuge lösbar gespannt werden können.

Vorteilhaft ist das Öffnungsmittel der Werkzeugaufnahme ein ringförmig geschlossener Öffnungsring, der axial versetzbar mit dem anderen Ende der Federspannbrücke in Kontakt bringbar ist und diesen Teil zu versetzen gestattet, wobei weiter vorteilhaft der Öffnungsring über einen von aussen zugänglichen Öffnungsmechanismus versetzbar ist, wodurch eine ergonomisch handhabbare Werkzeugaufnahme realisiert ist.

Die Erfindung wird bezüglich vorteilhafter Ausführungsbeispiele näher erläutert mit:
Fig. 1 als Spannvorrichtung
Fig. 2a-e als Varianten der Spannvorrichtung
Fig. 3a als geschlossene Werkzeugaufnahme
Fig. 3b als geöffnete Werkzeugaufnahme
Fig. 4 als Handkernbohrmaschine mit Werkzeugaufnahme

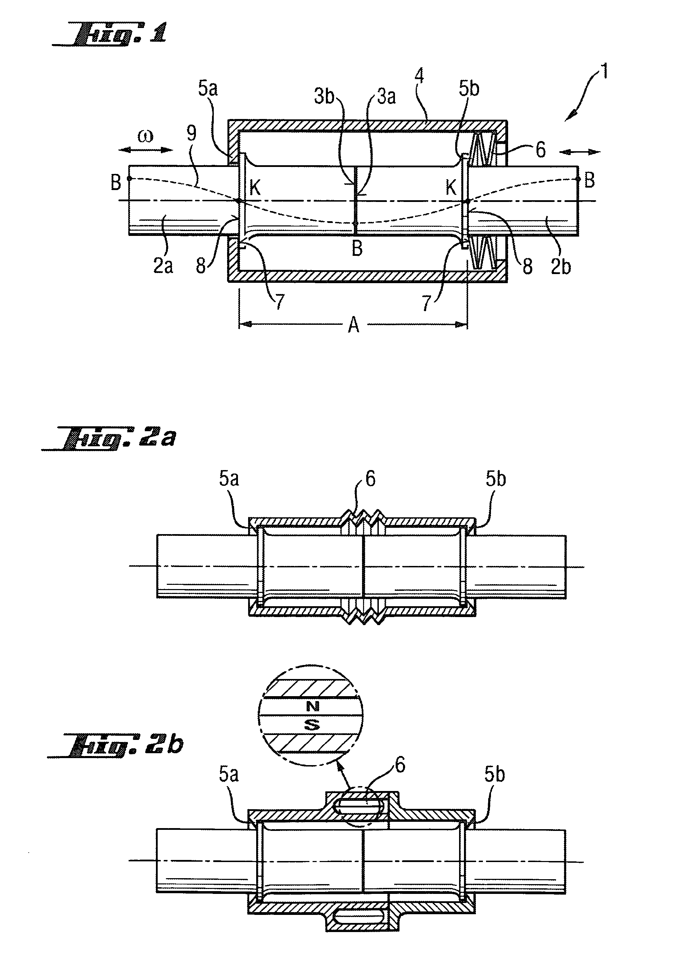

Nach Fig. 1 weist eine Spannvorrichtung 1 zur Verbindung zweier, axial mit einer Frequenz [omega] harmonisch in Form einer stehenden Longitudinalwelle 9 mit einem Abstand A zwischen zwei Schwingungsknoten K schwingender, Bauteile 2a, 2b mittels ihre aneinanderstossenden Planflächen 3a, 3b eine sich axial erstreckende Federspannbrücke 4 in Form einer Spannhülse auf, die an einem Ende zumindest ein Spannmittel 5a aufweist und über ein Federmittel 6 mit einem weiteren, in diesem Fall von dem Federmittel 6 in Form einer Tellerfeder integral mit ausgebildeten, Spannmittel 5b am anderen Ende axial elastisch verbunden ist. Dabei bilden die Spannmittel 5a, 5b zum jeweils gegenüberliegenden Ende hin orientierte, axial druckverspannbare Kontaktflächen 7 aus, denen an beiden Bauteilen 2a, 2b passend ausgebildete Kontaktgegenflächen 8 zugeordnet sind, welche an einem Schwingungsknoten K einer bei dieser Frequenz [omega] ausgebildeten stehenden Longitudinalwelle 9 positioniert sind. Die Planflächen 3a, 3b stossen dabei am Schwingungsbauch B aneinander.

Nach der in Fig. 2a dargestellten Variante ist zwischen den Spannmitteln 5a, 5b das Federmittel 6 durch Dehnfalten der einteilig ausgebildeten Spannhülse realisiert.

Nach der in Fig. 2b dargestellten Variante ist zwischen den Spannmitteln 5a, 5b das Federmittel 6 durch eine magnetische Kopplung mit einem Ringdauermagneten realisiert, dessen einseitig axial offener magnetischer Fluss bestrebt ist, die aus zwei Teilen bestehende Spannhülse axial zu verbinden.

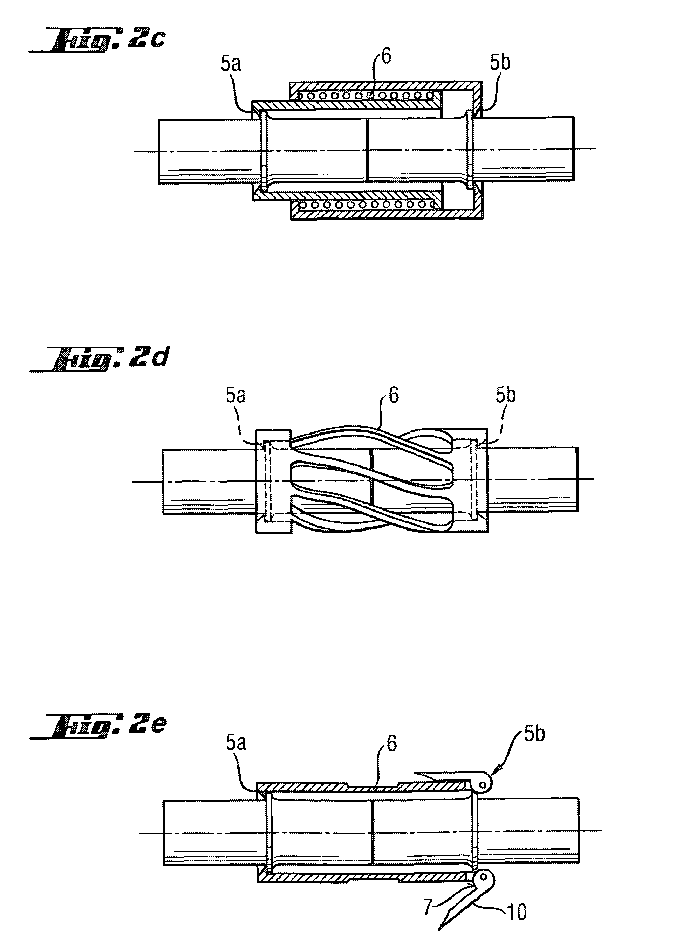

Nach der in Fig. 2c dargestellten Variante ist zwischen den Spannmitteln 5a, 5b das Federmittel 6 eine mechanische Feder, die zwischen zwei axial überlappenden Teilen der Spannhülse als Spiraldruckfeder in invertierter Anordnung ausgebildet ist.

Nach der in Fig. 2d dargestellten Variante ist zwischen den Spannmitteln 5a, 5b das Federmittel 6 durch eine Schubumformung von mehreren verdrillten und ausgebeulten Federstegen der einteilig ausgebildeten Spannhülse realisiert.

Nach der in Fig. 2e dargestellten Variante ist zwischen den Spannmitteln 5a, 5b das Federmittel 6 durch eine axial begrenzte Querschittsverringerung der Spannhülse realisiert. Zudem bildet das Spannmittel 5b integral ein Öffnungsmittel 10 in Form eines von aussen handhabbaren, drehschwenkbar festlegbaren Excenterhebels aus, dessen umlaufende Exzenterfläche die Kontaktfläche 7 ausbildet.

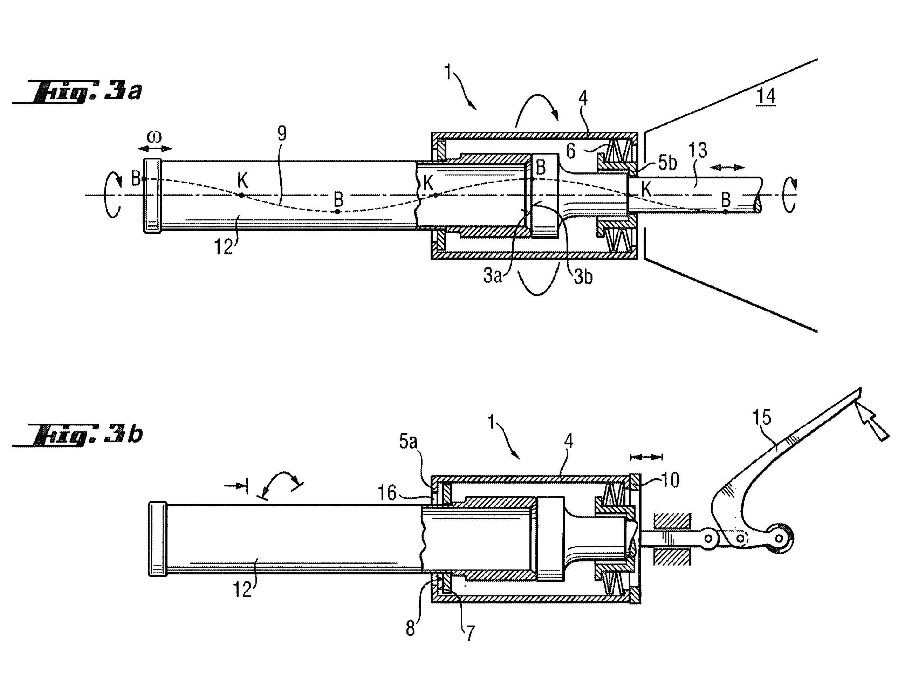

Nach der Fig. 3a ist bei einer als Werkzeugaufnahme für ein drehendes sowie harmonisch schwingend angetriebenes Werkzeug 12 in Form einer hohlen Kernbohrkrone ausgebildeten Spannvorrichtung 1, diese an genau einem Ende der Federspannbrücke 4 über ein Spannmittel 5b, die an einem Schwingungsknoten K einer bei der Frequenz [omega] ausgebildeten stehenden Longitudinalwelle 9 positioniert ist, fest mit einem drehenden und schwingenden Antriebsmittel 13 einer Maschine 14 (hier einer drehenden Handkernbohrmaschine mit überlagertem Ultraschall) verbunden. Die zur Übertragung der Schwingungsenergie von dem Antriebsmittel 13 auf das Werkzeug 12 benutzten Planflächen 3a, 3b stossen dabei am Schwingungsbauch B aneinander. Diese Darstellung zeigt die Werkzeugaufnahme im geschlossenen Zustand.

Nach Fig. 3b ist bei der geöffnet dargestellten Werkzeugaufnahme das Öffnungsmittel 10 ein ringförmig geschlossener Öffnungsring, der über einen von aussen handhabbar zugänglichen Öffnungsmechanismus 15 in Form eines Kniehebels axial versetzbar mit dem anderen Ende der Federspannbrücke 4 in Form einer Spannhülse in Kontakt bringbar ist und diesen Teil zu versetzen gestattet. Das an diesem anderen Ende angeordnete Spannmittel 5a ist als integral mit der Federspannbrücke 4 ausgeformter, ringförmig geschlossener Spannring mit sich stückweise umfänglich um eine bajonettartige Öffnung 16 an deren radial nach Innen einkragenden Bereichen (diese sind in der Bildebene dargestellt) ersteckenden Kontaktflächen 7 ausgebildet. Das Werkzeug 12 in Form einer hohlen Kernbohrkrone mit passend zugeordneten, radial nach aussen kragenden, bajonettartigen Gegenkontaktflächen 8 kann axial durch den Spannring hindurch in die Spannvorrichtung 1 eingeführt und durch Verdrehung zur Verspannung positioniert werden bzw. umgekehrt.

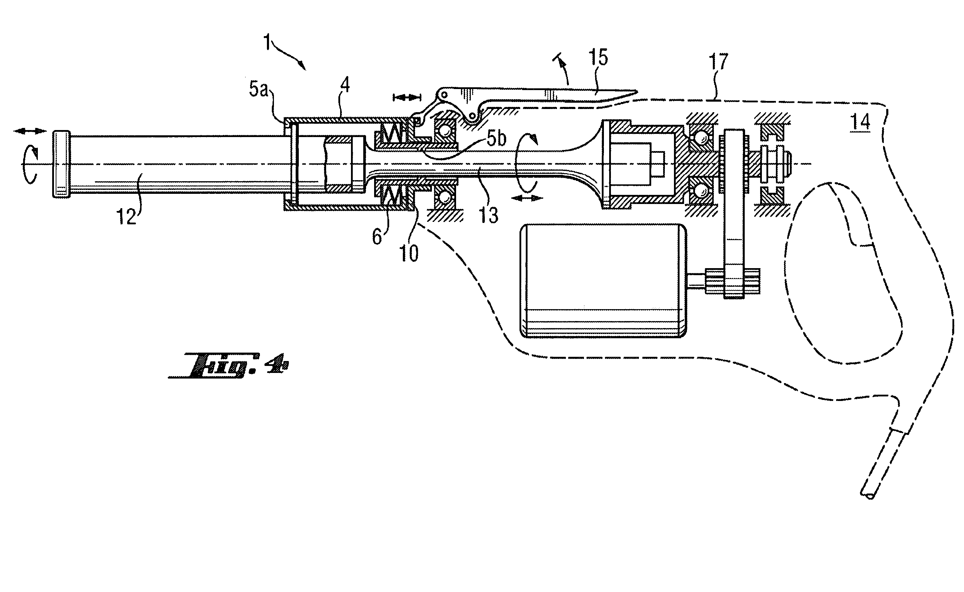

Nach Fig. 4 weist eine Maschine 14 in Form einer Handkernbohrmaschine mit einer Spannvorrichtung 1 in Form einer Werkzeugaufnahme für ein drehend sowie axial harmonisch schwingend angetriebenes Werkzeug 12 in Form einer hohlen Kernbohrkrone ein am handhabbaren Maschinengehäuse 17 drehbar gelagertes Spannmittel 5b in Form einer Führungshülse auf, welches drehfest mit dem Antriebsmittel 13 verbunden ist. Das Spannmittel 5b ist zudem über ein Federmittel 6 mit dem weiteren Spannmittel 5a am anderen Ende der Federspannbrücke 4 verbunden. Über den von aussen handhabbar zugänglichen Öffnungsmechanismus 15 in Form eines am Maschinengehäuse 17 schwenkbar gelagerten Kniehebels, der auf ein axial versetzbares Öffnungsmittel 10 in Form eines Öffnungsring einwirkt, ist das Spannmittel 5a gegen die Druckvorspannung des Federmittels 6 axial versetzbar.

## Patentansprüche

1. Spannvorrichtung zur Verbindung zweier, axial mit einer Frequenz ([omega]) harmonisch in Form einer stehenden Longitudinalwelle (9) mit einem Abstand (A) zwischen zwei Schwingungsknoten (K) schwingbarer, Bauteile (2a, 2b) mittels ihrer aneinanderstossenden Planflächen (3a, 3b), wobei eine sich axial erstreckende Federspannbrücke (4) an einem Ende zumindest ein Spannmittel (5a) aufweist und über ein Federmittel (6) mit zumindest einem weiteren Spannmittel (5b) am anderen Ende axial elastisch verbunden ist, **dadurch gekennzeichnet, dass** die Spannmittel (5a, 5b) zueinander den Abstand (A) aufweisen und zum jeweils gegenüberliegenden Ende hin orientierte, axial druckverspannbare Kontaktflächen (7) ausbilden, denen an beiden Bauteilen passend ausgebildete Kontaktgegenflächen zugeordnet sind.

2. Spannvorrichtung nach Anspruch 1, **dadurch gekennzeichnet, dass** die Federspannbrücke (4) eine Spannhülse ist, welche radial innen zur Aufnahme der Bauteile (2a, 2b) ausgebildet ist.

3. Spannvorrichtung nach Anspruch 1 oder 2, **dadurch gekennzeichnet, dass** das Federmittel (6) ein integraler Teil der Federspannbrücke (4) ist.

4. Spannvorrichtung nach Anspruch 1 oder 2, **dadurch gekennzeichnet, dass** das Federmittel (6) eine magnetische Kopplung ist, optional eine elektromagnetische Kopplung.

5. Spannvorrichtung nach Anspruch 1 oder 2, **dadurch gekennzeichnet, dass** das Federmittel (6) eine mechanische Feder ist, die als Zugfeder oder als Druckfeder ausgebildet ist.

6. Spannvorrichtung nach Anspruch 5, **dadurch gekennzeichnet, dass** die Feder eine Spiralfeder ist.

7. Spannvorrichtung nach Anspruch 5, **dadurch gekennzeichnet, dass** die Feder eine Tellerfeder ist.

8. Spannvorrichtung nach einem der vorherigen Ansprüche, **dadurch gekennzeichnet, dass** ein Spannmittel (5a) als ringförmig geschlossener Spannring mit sich zumindest stückweise umfänglich ersteckenden Kontaktflächen (7) ausgebildet ist.

9. Spannvorrichtung nach Anspruch 8, **dadurch gekennzeichnet, dass** zumindest ein Spannring mit einer bajonettartigen Öffnung (16) ausgebildet ist, an deren radial nach Innen einkragenden Bereichen Kontaktflächen (7) ausgebildet sind.

10. Spannvorrichtung nach einem der vorherigen Ansprüche, **dadurch gekennzeichnet, dass** die Federspannbrücke (4) mit einem zur axialen Versetzung der Spannmittel (5a, 5b) ausgebildeten Öffnungsmittel (10) verbunden ist, über welches gegen die Vorspannung des Federmittels (6) die Spannmittel (5a, 5b) zueinander axial weiter beabstandbar sind.

11. Spannvorrichtung nach Anspruch 10, **dadurch gekennzeichnet, dass** das Öffnungsmittel (10) von aussen handhabbar ausgebildet ist.

12. Spannvorrichtung nach einem der Ansprüche 10 bis 11, **dadurch gekennzeichnet, dass** ein Spannmittel (5b) integral ein Öffnungsmittel (10) ausbildet, optional in Form eines drehschwenkbar festlegbaren Excenterhebels, dessen umlaufende Exzenterfläche die Kontaktfläche (7) ausbildet.

13. Spannvorrichtung nach einem der vorherigen Ansprüche, **dadurch gekennzeichnet, dass** diese an genau einem Ende der Federspannbrücke (4) über ein Spannmittel (5b) fest mit einem Antriebsmittel (13) einer dieses antreibenden Maschine (14) verbunden sowie als Werkzeugaufnahme für ein zumindest teilweise harmonisch schwingend angetriebenes Werkzeug (12) ausgebildet ist.

14. Spannvorrichtung nach Anspruch 13, **dadurch gekennzeichnet, dass** das Öffnungsmittel (10) der Werkzeugaufnahme ein ringförmig geschlossener Öffnungsring ist, der axial versetzbar mit dem anderen Ende der Federspannbrücke (4) in Kontakt bringbar ist und diesen Teil zu versetzen gestattet, wobei optional der Öffnungsring über einen von aussen zugänglichen Öffnungsmechanismus (15) versetzbar ist.

## Claims

1. Clamping device for connecting, by means of their abutting plane faces (3A, 3b), two parts (2a, 2b) which are able to be vibrated axially at a frequency ([omega]) by resonant vibration in the form of a longitudinal standing wave having a distance (A) between two vibration nodes (K), an axially extending, resiliently operating, clamping bridge (4) having at least one clamping means (5a) at one end and being elastically connected axially to at least one further clamping means (5b) at the other end by a resilient means (6), **characterised in that** the clamping means (5a, 5b) are at the distance (A) from one another and form faces for contact (7) oriented towards opposite respective ends which can be braced axially in compression and which have associated with them mating faces for contact which are formed, to fit, on the two parts.

2. Clamping device according to claim 1, **characterised in that** the resiliently operating clamping bridge (4) is a clamping sleeve which is formed radially, on the interior, to receive the parts (2a, 2b).

3. Clamping device according to claim 1 or 2, **characterised in that** the resilient means (6) is an integral part of the resiliently operating clamping bridge (4).

4. Clamping device according to claim 1 or 2, **characterised in that** the resilient means (6) is a magnetic coupling and, as an option, an electromagnetic coupling.

5. Clamping device according to claim 1 or 2, **characterised in that** the resilient means (6) is a mechanical spring which takes the form of a tension spring or a compression spring.

6. Clamping device according to claim 5, **characterised in that** the spring is a coil spring.

7. Clamping device according to claim 5, **characterised in that** the spring is a disc spring.

8. Clamping device according to one of the preceding claims, **characterised in that** one clamping means (5a) is in the form of an annularly continuous clamping ring having faces for contact of which at least a part or parts extend circumferentially.

9. Clamping device according to claim 8, **characterised in that** at least one clamping ring is formed to have an opening (16) of a bayonet-joint type on whose regions which extend inwards radially faces for contact (7) are formed.

10. Clamping device according to one of the preceding claims, **characterised in that** the resilient clamping bridge (4) is connected to an opening means (10) which is designed for the axial displacement of the clamping means (5a, 5b) and by means of which the clamping means (5a, 5b) can be spaced further apart from one another axially in opposition to the preloading from the resilient means (6).

11. Clamping device according to claim 10, **characterised in that** the opening means (10) is designed to be operable manually.

12. Clamping device according to either of claims 10 and 11, **characterised in that** one clamping means (5b) forms an integral opening means (10) which, as an option, is in the form of a cammed lever which can be locked by being pivoted in rotation and the surrounding surface of whose cam forms the face for contact (7).

13. Clamping device according to one of the preceding claims, **characterised in that** it is solidly connected at precisely one end of the resiliently operating clamping bridge (4), via one clamping means (5b), to a drive means (13) of a machine or power-tool (14) which drives the latter, and it takes the form of a tool holder for a tool (12) which is driven to vibrate resonantly at least at times.

14. Clamping device according to claim 13, **characterised in that** the opening means (10) of the tool holder is an annularly continuous apertured ring which can be brought into contact, by axial displacement, with the other end of the resiliently operating clamping bridge (4) and which allows this part to be displaced, the apertured ring being, as an option, displaceable by means of an opening mechanism (15) which is accessible from the outside.

## Revendications

1. Dispositif de serrage pour la liaison de deux parties de construction (2a, 2b), pouvant osciller axialement avec une fréquence ([oméga]) harmonique sous forme d'une onde longitudinale (9) stationnaire avec une période (A) entre deux noeuds de vibration (K) au moyen de leurs surfaces planaires (3a, 3b), se cognant, l'une des brides de serrage de ressort (4) s'étirant axialement présentant à au moins une extrémité un moyen de serrage (5a) et étant reliée axialement de manière élastique avec au moins un autre moyen de serrage (5b) à l'autre extrémité par une moyen ressort (6) **caractérisé en ce que** les moyens de serrage (5a, 5b) ont entre eux un espace (A) et forment des surfaces de contact (7) pouvant être resserrées sous pression axialement orientées chaque fois vers l'extrémité opposée, auxquelles des surfaces de contact correspondantes conçues pour être adaptées aux deux parties de construction sont attenantes.

2. Dispositif de serrage selon la revendication 1 **caractérisé en ce que** la bride de serrage de ressort (4) est une goupille de serrage qui est conçue radiale à l'intérieur pour la réception des parties de construction (2a, 2b).

3. Dispositif de serrage selon les revendications 1 ou 2 **caractérisé en ce que** le moyen ressort (6) constitue une partie intégrale de la bride de serrage de ressort (4).

4. Dispositif de serrage selon les revendications 1 ou 2 **caractérisé en ce que** le moyen ressort (6) est un couplage magnétique, éventuellement un couplage électromagnétique.

5. Dispositif de serrage selon les revendications 1 ou 2 **caractérisé en ce que** le moyen ressort (6) est un ressort mécanique qui est conçu en forme de ressort de traction ou de ressort de compression.

6. Dispositif de serrage selon la revendication 5 **caractérisé en ce que** le ressort est un ressort spirale.

7. Dispositif de serrage selon la revendication 5 **caractérisé en ce que** le ressort est une rondelle ressort.

8. Dispositif de serrage selon l'une des revendications précédentes **caractérisé en ce que** le moyen ressort (5a) est un anneau de serrage fermé de forme circulaire comprenant au moins partiellement des surfaces de contact (7) formées sur son pourtour.

9. Dispositif de serrage selon la revendication 8 **caractérisé en ce qu'**au moins un anneau de serrage est conçu avec une ouverture de type baïonnette (16) sur laquelle des surfaces de contact (7) sont formées radialement sur les zones recourbées vers l'intérieur.

10. Dispositif de serrage selon l'une des revendications précédentes **caractérisé en ce que** la bride de serrage de ressort (4) est reliée avec un moyen d'ouverture (10) formé pour le déplacement axial des moyens de serrage (5a, 5b) par-dessus lequel la précontrainte du moyen ressort (6) peut encore espacer davantage axialement les moyens de serrage (5a, 5b) l'un par rapport à l'autre.

11. Dispositif de serrage selon la revendication 10 **caractérisé en ce que** le moyen d'ouverture (10) est conçu pour pouvoir être manoeuvré de l'extérieur.

12. Dispositif de serrage selon l'une des revendications 10 à 11 **caractérisé en ce qu'**un moyen de serrage (5b) forme intégralement un moyen d'ouverture (10), éventuellement sous la forme d'un levier excentrique pouvant être orienté et pivoté en rotation dont la surface excentrique de parcours forme la surface de contact (7).

13. Dispositif de serrage selon l'une des revendications précédentes **caractérisé en ce que** celui-ci est relié exactement à l'une des extrémités de la bride de serrage (5) avec un moyen d'entrainement (13) d'une machine l'entraînant (14) par l'intermédiaire d'un moyen de serrage (5b) ainsi qu'en tant que réceptacle d'outil pour un outil (12) entraîné au moins partiellement harmoniquement.

14. Dispositif de serrage selon la revendication 13 **caractérisé en ce que** le moyen d'ouverture (10) du réceptacle d'outil est un anneau d'ouverture de forme circulaire fermée qui peut être mobile axialement et mis en contact avec l'autre extrémité de la bride de serrage (4) et peut déplacer cette partie, l'anneau d'ouverture pouvant éventuellement être déplacé par l'intermédiaire d'un mécanisme d'ouverture (15) accessible de l'extérieur.
